# EUROPEAN PATENT SPECIFICATION

(11) **EP 2 234 283 B1**
(45) Date of publication and mention of the grant of the patent: **22.05.2019**
(21) Application number: 08870143.8
(22) Date of filing: 31.12.2008
(51) Int. Cl.: H04B 7/00, H04W 92/00

(54) **COMMUNICATION SYSTEM, COMMUNICATION INTERFACE AND COMMUNICATION METHOD**
KOMMUNIKATIONSSYSTEM, KOMMUNIKATIONSSCHNITTSTELLE UND KOMMUNIKATIONSVERFAHREN
SYSTÈME DE COMMUNICATION, INTERFACE DE COMMUNICATION ET PROCÉDÉ DE COMMUNICATION

(30) Priority: 02.01.2008 CN 200810000012
(43) Date of publication of application: 29.09.2010
(60) Divisional application: 18198587.0
(73) Proprietor: Huawei Technologies Co., Ltd., Longgang District Shenzhen, Guangdong 518129 (CN)
(72) Inventor: WU, Wangjun, Shenzhen Guangdong 518129 (CN); WU, Xingguo, Shenzhen Guangdong 518129 (CN); LAN, Peng, Shenzhen Guangdong 518129 (CN); SU, Yuxin, Shenzhen Guangdong 518129 (CN); ZHOU, Jun, Shenzhen Guangdong 518129 (CN); ZHAO, Ming, Shenzhen Guangdong 518129 (CN); CHEN, Ping, Shenzhen Guangdong 518129 (CN); YAO, Guoqiang, Shenzhen Guangdong 518129 (CN); GUO, Jiang, Shenzhen Guangdong 518129 (CN); LI, Baomin, Shenzhen Guangdong 518129 (CN); LI, Gang, Shenzhen Guangdong 518129 (CN); JIANG, Yajun, Shenzhen Guangdong 518129 (CN); LI, Qi, Shenzhen Guangdong 518129 (CN); YANG, Fangliang, Shenzhen Guangdong 518129 (CN); ZHANG, Zhidong, Shenzhen Guangdong 518129 (CN); YANG, Ganghua, Shenzhen Guangdong 518129 (CN); PENG, Qingquan, Shenzhen Guangdong 518129 (CN)
(74) Representative: Epping - Hermann - Fischer
(86) International application number: PCT/CN2008/073901
(87) International publication number: WO 2009/086790

(56) References cited:
- WO-A2-2006/058288
- CN-A- 101 217 716
- US-A- 6 154 728
- US-A1- 2001 051 530
- US-A1- 2007 038 732
- US-A1- 2007 149 150
- US-A1- 2007 152 873

## Description

### Field of the Invention

The present invention relates to a communication technology, and in particular, to a communication system, a communication interface, and a communication method.

### Background of the Invention

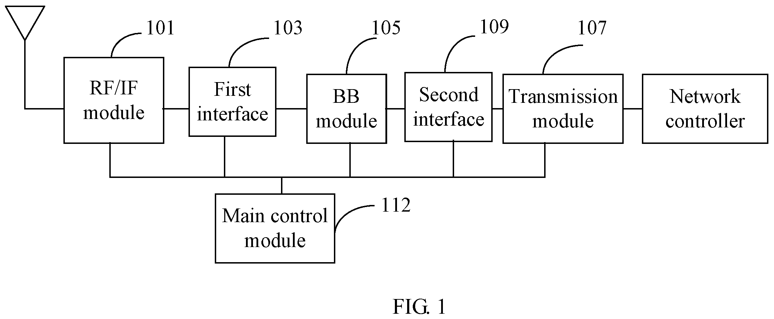

FIG. 1 shows a logical architecture of a base station system, the base station system includes a transmission module 107, a main control module 112, a base band (BB) module 105, a radio frequency/intermediate frequency (RF/IF) module 101, and interfaces (for example, a first interface 103 and a second interface 109). The base station system communicates with a network controller. In the uplink channel, a signal from the air interface is processed by the RF/IF module 101 in the following ways under the control of the main control module 112: RF filtering and amplification, down conversion, analog/digital (A/D) conversion, and digital filtering, and is changed into a BB signal; the BB signal is processed by the BB module 105 in ways such as demodulation and decoding; finally, the information is sent to the network controller through the transmission module 107. In the downlink channel, a signal from the network controller is processed in the following ways by the transmission module 107 and the BB module 105 under the control of the main control module 112: encoding and modulation; this signal is processed by the RF/IF module 101 in ways such as digital/analog (D/A) conversion, up conversion, filtering and amplification; finally, the signal is transmitted through an antenna. In FIG. 1, the main control module 112, the transmission module 107,
and the BB module 105 are logical modules. The connection topology between these modules indicates a logical connection relationship.

Different RAT (Radio Access Technology) of base station systems have the same logical functions, but may be physically implemented by using different solutions. For the base station system shown in FIG. 1, logical architecture analysis needs to be performed to implement the mapping between the logical architecture and the physical architecture. The traditional physical architecture may be implemented in the following two ways: upper shift of the BB and lower shift of the BB.

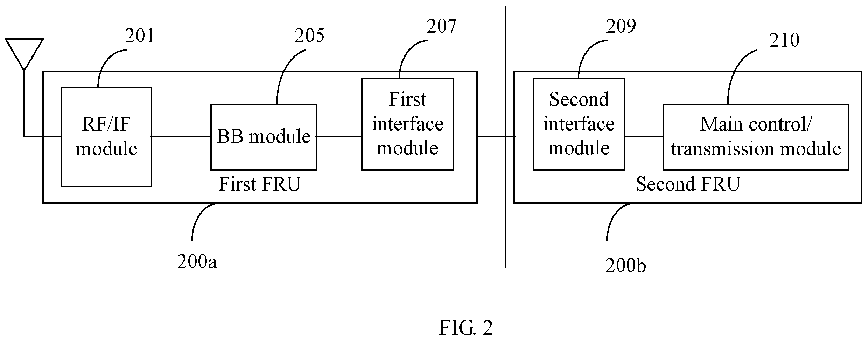

FIG. 2 shows an architecture based on the upper shift of the BB. As shown in FIG. 2, the BB and the RF module are integrated into a field replaceable unit (FRU). In the RF/IF module 201, the IF is an optional module. The entire system includes at least a first FRU 200a and a second FRU 200b. The first FRU 200a includes an RF/IF module 201, a BB module 205, and a first interface module 207 connected to the second FRU 200b. The second FRU 200b includes a second interface module 209 connected to the first FRU 200a and a main control/transmission module 210.

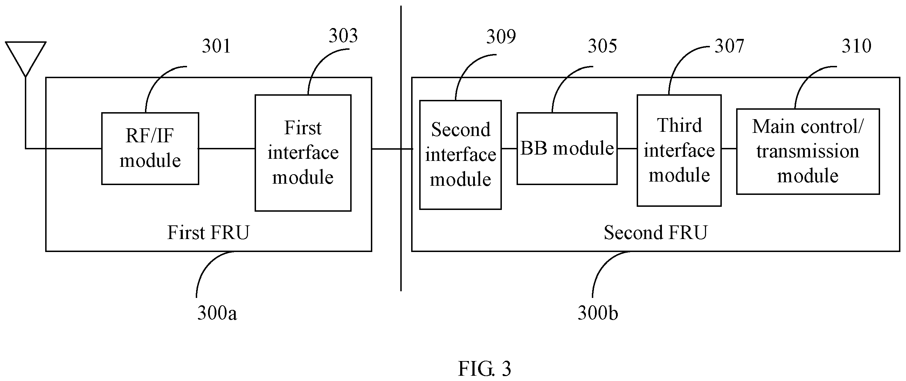

FIG. 3 shows an architecture based on the lower shift of the BB. As shown in FIG. 3, the BB module 305 and the main control/transmission module are located in the second FRU 300b. The entire system includes at least a first FRU 300a and a second FRU 300b. The first FRU 300a includes an RF/IF module 301, and a first interface module 303 connected to the second FRU 300b. The second FRU 300b includes a BB module 305, a second interface module 309 connected to the first FRU 300a, a main control/transmission module 310, and a third interface module 307 connected to the BB module 305 and the main control/transmission module 310.

US 2001/051530 A1 relates to an information processing device including first and second wireless communication units and a communication monitoring and controlling unit, in which, each of the first and second wireless communication units includes a Base-band section and a RF section.

US 2007/152873 A1 relates to a radar system having a transmit signal path and a receive signal path and an event generator which is responsive to command signals provided by a digital signal processor (DSP).

During the implementation of the present invention, the inventor discovers at least the following problems in the prior art:
The product architecture is not flexible enough, failing to meet operators' requirements for flexible system evolution.

### Summary of the Invention

Embodiments of the present invention provide a base station system, so that a BB can be split into two parts. One part may be integrated with the RF module, and the other part may be an independent physical entity.

The foregoing and other objects are achieved by the features of the independent claim, which defines the invention. Further implementation forms are apparent from the dependent claims, the description and the figures.

To achieve the above objective, a communication system includes a first FRU and a second FRU.

The first FRU includes an RF/IF module, a first BB module, and a first interface module connected to the second FRU.

The second FRU includes a second interface module connected to the first FRU, where the second interface module is adapted to extend the second BB module.

A communication system includes a first FRU and a second FRU.

The first FRU includes an RF/IF module and a first interface module, where the first interface module is adapted to extend the first BB module.

The second FRU includes a second BB module and a second interface module connected to the first FRU.

A communication interface includes a first interface module located in the first FRU.

In the downlink data stream direction, one part of the data is input to the first BB module through the first interface module, and the other part of the data is input to the RF/IF module through the first interface module, without being processed by the first BB module.

In the uplink data stream direction, the data output by the RF/IF module and the data output by the first BB module are converged on the first interface module.

A communication interface includes a second interface module located in the second FRU.

In the uplink data stream direction, one part of the data is input to the second BB module through the second interface module, and the other part of the data is input to a main control/transmission module through the second interface module, without being processed by the second BB module.

In the downlink data stream direction, the data output by the main control/transmission module and the data output by the second BB module are converged on the second interface module.

A communication interface includes a first interface module and a second interface module.

The first interface module is located in the first FRU.

In the downlink data stream direction, one part of the data is input to the first BB module through the first interface module, and the other part of the data is input to the RF/IF module through the first interface module, without being processed by the first BB module.

In the uplink data stream direction, the data output by the RF/IF module and the data output by the first BB module are converged on the first interface module.

The second interface module is located in the second FRU.

In the uplink data stream direction, one part of the data is input to the second BB module through the second interface module, and the other part of the data is input to the main control/transmission module through the second interface module, without being processed by the second BB module.

In the downlink data stream direction, the data output by the main control/transmission module and the data output by the second BB module are converged on the second interface module.

A communication method includes:
in the downlink data stream direction, by the first BB module, receiving data from the first interface module, processing one part of the data according to a preset configuration rule for processing the data, and outputting the processed data to the RF/IF module; and
in the uplink data stream direction, by the first BB module, receiving data from the RF/IF module, processing one part of the data according to the preset configuration rule for processing the data, and outputting the processed data to the first interface module.

A communication method includes:
in the uplink data stream direction, by the second BB module, receiving data from the second interface module, processing one part of the data stream according to the configuration rule for processing the data, and outputting the processed data to the main control/transmission module; and
in the downlink data stream direction, by the second BB module, receiving data from the main control/transmission module, processing one part of the data according to the preset configuration rule for processing the data, and outputting the processed data to the second interface module.

A communication method includes:
in the downlink data stream direction, by the first BB module, receiving data from the first interface module, processing one part of the data according to the configuration rule for processing data, and outputting the processed data to the RF/IF module; in the uplink data stream direction, by the first BB module, receiving data from the RF/IF module, processing one part of the data according to the configuration rule for processing data, and outputting the processed data to the first interface module; and
in the uplink data stream direction, by the second BB module, receiving data from the second interface module, processing one part of the data according to the preset configuration rule for processing data, and outputting the processed data to the main control/transmission module; in the downlink data stream direction, by the second BB module, receiving data from the main control/transmission module, processing one part of the data according to the preset configuration rule for processing data, and outputting the processed data to the second interface module.

A communication system includes multiple first FRUs and multiple second FRUs.

First BB modules of the multiple first FRUs are interconnected through respective interface modules.

Or the first BB modules in the multiple first FRUs and second BB modules in the multiple second FRUs are interconnected through respective interface modules.

A communication interface includes multiple first interface modules, where the first interface modules are applied in a communication system that includes multiple first FRUs, with each first FRU including a first BB module and a first interface module.

In the downlink data stream direction, the data is input to the first BB module through the first interface module in one or more first FRUs, and is then input to the RF/IF module.

In the uplink data stream direction, the data is input to the first BB module through the RF/IF module in one or more first FRUs, and is then output from the first interface module.

A communication interface includes multiple first interface modules and multiple second interface modules. The first interface modules and the second interface modules are applied in a communication system that includes multiple first FRUs and multiple second FRUs. Each first FRU includes a first BB module and a first interface module. Each second FRU includes a second BB module and a second interface module.

In the downlink data stream direction, the data is input to the first BB module through the first interface module in one or more first FRUs, and is then input to the RF/IF module; the data output by the main control/transmission module is input to the second BB module in one or more second FRUs, and is then output to the first FRU through the second interface module.

In the uplink data stream direction, the data is input to the first BB module through the RF/IF module in one or more first FRUs, and is then output from the first interface module; the data from the first FRU is input to the second interface module in one or more second FRUs according to the configuration rule, and is then output to the main control/transmission module through the second BB module.

A communication method includes:
in the downlink data stream direction, by the first BB module in one or more first FRUs, receiving data from the first interface module, and inputting the data to the RF/IF module; and
in the uplink data stream direction, by the first BB module in one or more first FRUs, receiving data from the RF/IF module, and outputting the data from the first interface module.

A communication method includes:
in the downlink data stream direction, by the first BB module in one or more first FRUs, receiving data from the first interface module, and inputting the data to the RF/IF module; by the second BB module in one or more second FRUs, receiving data from the main control/transmission module, and outputting the data through the second interface module; and
in the uplink data stream direction, by the first BB module in one or more first FRUs, receiving data from the RF/IF module, and outputting the data from the first interface module; by the second BB module in one or more second FRUs, receiving data that is input to the second interface module according to the configuration rule, and outputting the data to the main control/transmission module.

A communication system includes a first FRU and a second FRU. The first FRU includes a first BB module, an RF/IF module, and a first interface module connected to the second FRU. The second FRU includes a second BB module.

The first interface module in the first FRU is adapted to output data to a main control/transmission module, and the main control/transmission module is adapted to forward all or one part of the data to the second BB module in the second FRU for processing.

A communication interface includes:
a first interface module, located in the first FRU and adapted to:
in the downlink data stream direction, receive data from the main control/transmission module, and output the data to the first BB module, where the data is further output to the RF/IF module through the first BB module; and
in the uplink data stream direction, receive data from the first BB module, and output the data to the main control/transmission module, where one part of the data is further sent by the main control/transmission module to the second BB module in the second FRU for processing.

A communication method includes:
in the downlink data stream direction, by the first BB module, obtaining data that the first interface module receives from the main control/transmission module, and outputting the obtained data to the RF/IF module; and
in the uplink data stream direction, by the first BB module, receiving data from the RF/F module, and outputting one part of the data to the main control/transmission module directly; sending, by the main control/transmission module, the other part of the data to the second BB module in the second FRU for processing.

Compared with the prior art, embodiments of the present invention have the following merits: A BB may be split into two parts by using the FRUs; one part of the BB may be integrated with the RF module, and the other part may be an independent physical entity. Thus, the system architecture is flexible, without being limited by the upper shift or lower shift of the BB.

### Brief Description of the Drawings

FIG. 1 shows a logical architecture of a base station system in the prior art;
FIG. 2 is a schematic diagram illustrating integration of a BB and an RF module into an FRU in the prior art;
FIG. 3 is a schematic diagram illustrating distribution of the BB and the RF module in different FRUs in the prior art;
FIG. 4 illustrates the processing of an uplink BB in an embodiment of the present invention;
FIG. 5 illustrates the processing of a downlink BB in an embodiment of the present invention;
FIG. 6 shows an architecture of a base station system in a first embodiment of the present invention;
FIG. 7 shows an architecture of a base station system in a second embodiment of the present invention;
FIG. 8 shows an architecture of a base station system in a third embodiment of the present invention;
FIG. 9 shows an architecture of a base station system in a fourth embodiment of the present invention;
FIG. 10 shows an architecture of a base station system in a fifth embodiment of the present invention;
FIG. 11 shows an architecture of a base station system in a sixth embodiment of the present invention;
FIG. 12 shows an architecture of a base station system in a seventh embodiment of the present invention;
FIG. 13 shows an architecture of a base station system in an eighth embodiment of the present invention;
FIG. 14 shows an architecture of a base station system in a ninth embodiment of the present invention;
FIG. 15 shows an architecture of a base station system in a tenth embodiment of the present invention;
FIG. 16 shows an architecture of a base station system in an eleventh embodiment of the present invention; and
FIG. 17 shows a architecture of a base station system in a twelfth embodiment of the present invention.

### Detailed Description of the Embodiments

The present invention is hereinafter described in detail with reference to the accompanying drawings and exemplary embodiments.

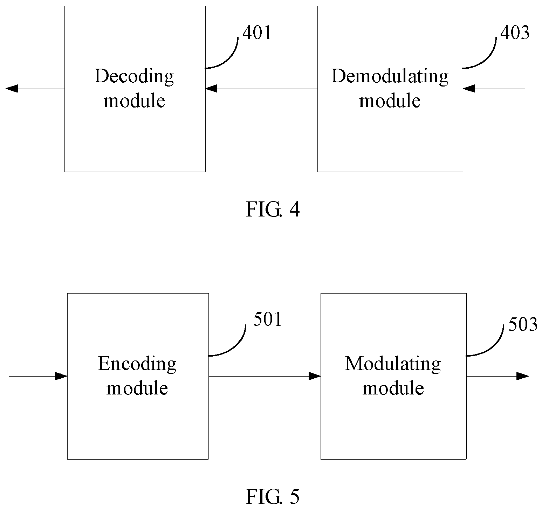

The BB processing in a communication system generally includes uplink BB processing and downlink BB processing. As shown in FIG. 4, the uplink BB processing generally involves a demodulating module 403 and a decoding module 401. As shown in FIG. 5, the downlink BB processing generally involves an encoding module 501 and a modulating module 503. In addition, in some communication systems, the downlink BB processing involves a spreading module, and the uplink BB processing involves a despreading module. In embodiments of the present invention, functional modules that include one or more of the following functions are collectively called a BB module: encoding, decoding, modulating, decoding, spreading, and dispreading. The main control/transmission module may be located in the second FRU or be an independent entity. The first FRU may be a physical entity in various forms, including but not limited to a radio remote unit (RRU) and a radio frequency unit (RFU) of the base station. In the RF/IF module, the IF is an optional module, that is, the RF/IF module may include the RF module only.

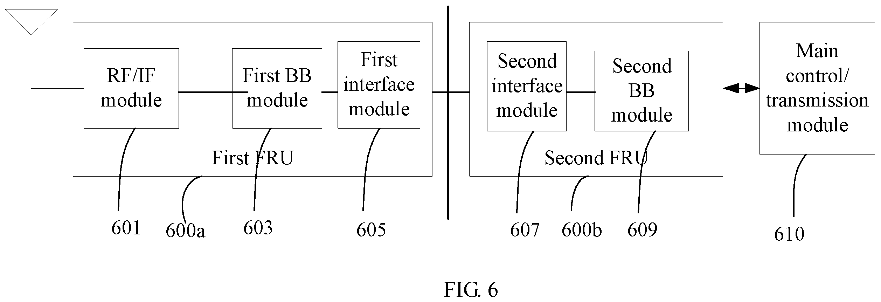

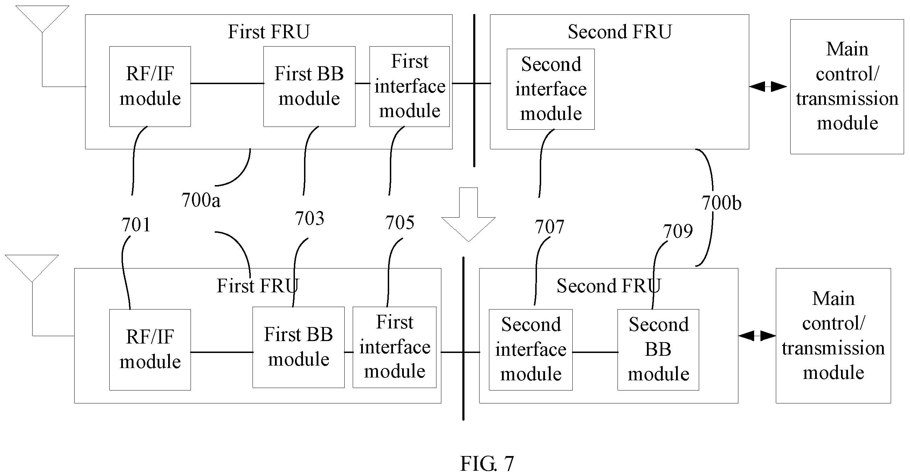

As shown in FIG. 6, the architecture of the communication system in the first embodiment of the present invention includes a first FRU 600a and a second FRU600b. Any one of the first FRU 600a and the second FRU 600b include a BB module. The first FRU 600a includes a first BB module 603, an RF/IF module 601, and a first interface module 605 connected to the second FRU 600b. The second FRU 600b includes a second BB module 609 and a second interface module 607 connected to the first FRU 600a. The RF/IF module 601 may be directly connected to the first BB module 603, and the first BB module 603 is directly connected to the first interface module 605. The RF/IF module 601, the first BB module 603, and the first interface module 605 may also be connected with each other through a backplane bus. The second BB module 609 and the second interface module 607 may be connected directly or through the backplane bus. The main control/transmission module 610 may be located in the second FRU 600b or be an independent entity. In this embodiment, any one of the first FRU 600a and the second FRU 600b include the BB module, and may be configured to implement the BB processing function. Thus, split of the BB may be achieved by using FRUs. One part of the BB may be integrated with the RF module, and the other part may be an independent physical entity. In this way, the system architecture is more flexible, without being limited by the upper shift or lower shift of the BB. As shown in FIG. 7, the architecture of the communication system in the second embodiment of the present invention includes a first FRU 700a and a second FRU 700b. The first FRU 700a includes an RF/IF module 701, a first BB module 703, and a first interface module 705 connected to the second FRU 700b. The RF/IF module 701 may be directly connected to the first BB module 703, and the first BB module 703 is directly connected to the first interface module 705. The RF/IF module 701, the first BB module 703, and the first interface module 705 may also be connected with each other through the backplane bus. The second FRU 700b includes a second interface module 707 connected to the first FRU 700a. The second interface module 707 may be adapted to extend the BB module. For example, in some communication systems, this method may be used to add an independent BB module (for example, the second BB module 709), thus meeting the expansion and evolution or upgrade requirement and applying the BB on a distributed basis. In this embodiment, if the BB and the RF module are initially integrated into the first FRU 700a, a separate BB module is added to the second FRU 700b when the RF module has new features. For example, the second BB module 709 may implement system evolution, and the original module integrating the BB and the RF module may be used continuously. Thus, the system architecture is more flexible, lowering module replacement costs and protecting the original investments of operators.

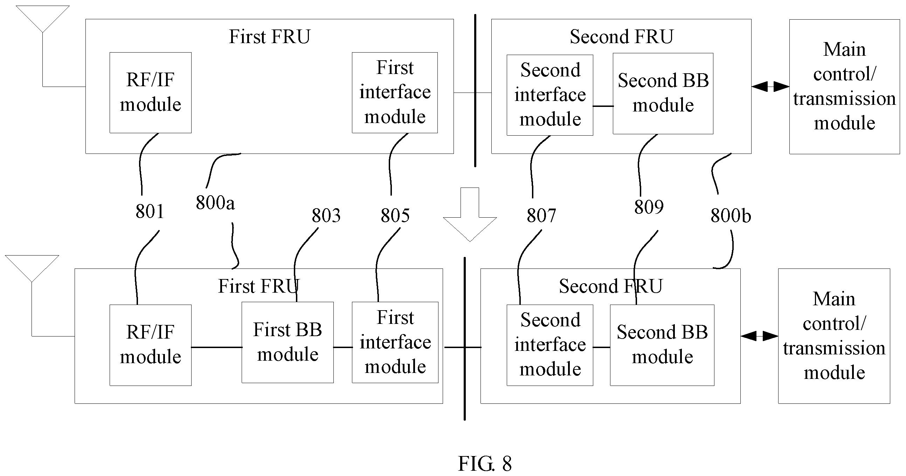

As shown in FIG. 8, the architecture of the communication system in the third embodiment of the present invention includes a first FRU 800a and a second FRU 800b. The first FRU 800a includes an RF/IF module 801 and a first interface module 805 adapted to extend a first BB module 803. The second FRU 800b includes a second BB module 809 and a second interface module 807 connected to the first FRU 800a. For example, in some communication systems, an independent BB module (that is, the first BB module 803) may be added to the first FRU 800a by using the first interface module 805, thus meeting the system expansion and evolution requirements and applying the BB on a distributed basis. The RF/IF module 801 may be directly connected to the first BB module 803, and the first BB module 803 is directly connected to the first interface module 805. The RF/IF module 801, the first BB module 803, and the first interface module 805 may also be connected with each other through the backplane bus. In this embodiment, the system architecture supports the functional module integrating the RF module and BB. If the RF module is not integrated with the BB initially, a BB module may be added to a new first FRU module subsequently if there is a need and the condition permits. The newly added BB module can work with the original module, so that the system can be upgraded smoothly, making the system architecture more flexible.

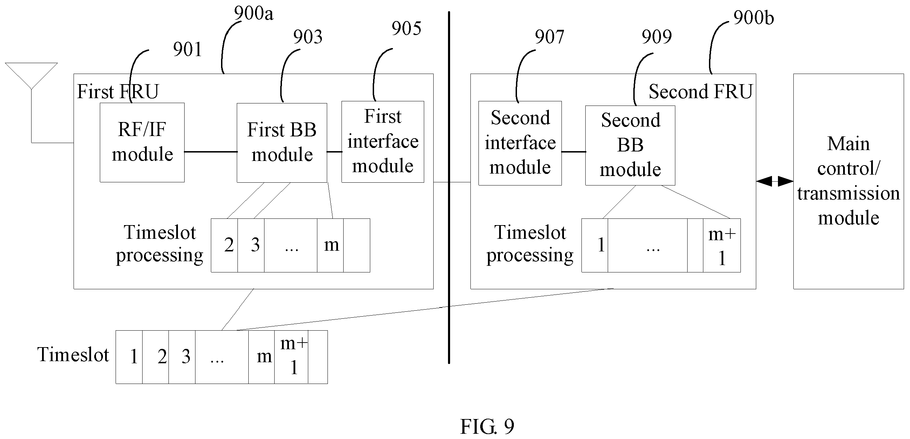

As shown in FIG. 9, the architecture of the communication system in the fourth embodiment of the present invention includes a first FRU 900a and a second FRU 900b. The first FRU 900a and the second FRU 900b include a BB module. The first FRU 900a includes a first BB module 903, an RF/IF module 901, and a first interface module 905 connected to the second FRU 900b. The second FRU 900b includes a second BB module 909 and a second interface module 907 connected to the first FRU 900a. The RF/IF module 901 may be directly connected to the first BB module 903, and the first BB module 903 is directly connected to the first interface module 905. The RF/IF module 901, the first BB module 903, and the first interface module 905 may also be connected with each other through the backplane bus. The second BB module 909 and the second interface module 907 may be connected directly or through the backplane bus. In a time division multiple access (TDMA) communication system, the information transmitted through an RF interface may be represented in timeslots. In this embodiment, one part of the timeslots may be processed by the first BB module 903 in the first FRU 900a, and the other part of the timeslots may be processed by the second BB module 909 in the second FRU 900b, and thus the BB signal is processed on a distributed basis. For example, the first BB module 903 processes timeslots in odd numbers, and the second BB module 909 processes timeslots in even numbers. Alternatively, the timeslots are divided into two parts according to a preset rule, and these two parts are processed by the first BB module 903 and the second BB module 909 respectively. In this embodiment, the BB signal is processed based on the division of timeslots, making the system architecture more flexible.

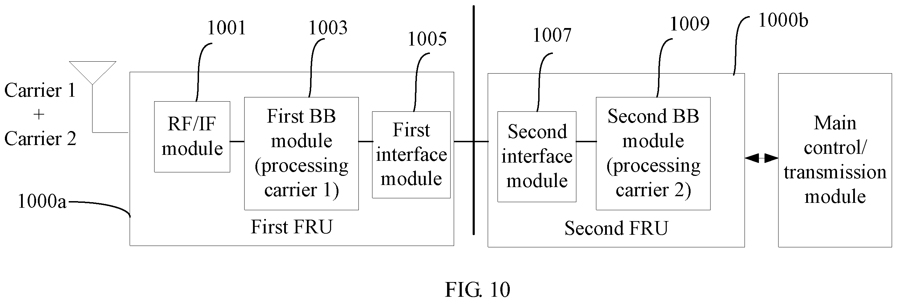

As shown in FIG. 10, the architecture of the communication system in the fifth embodiment of the present invention includes a first FRU 1000a and a second FRU 1000b. The first FRU 1000a and the second FRU 1000b include a BB module. The first FRU 1000a includes a first BB module 1003, an RF/IF module 1001, and a first interface module 1005 connected to the second FRU 1000b. The second FRU 1000b includes a second BB module 1009 and a second interface module 1007 connected to the first FRU 1000a. The RF/IF module 1001 may be directly connected to the first BB module 1003, and the first BB module 1003 is directly connected to the first interface module 1005. The RF/IF module 1001, the first BB module 1003, and the first interface module 1005 may also be connected with each other through the backplane bus. The second BB module 1009 and the second interface module 1007 may be connected directly or through the backplane bus. When the RF module in the communication system processes multiple carriers, multiple carriers may be divided into two parts according to a preset rule. For example, one part of the carriers is smaller than a preset frequency, and the other part of the carriers is greater than the preset frequency. The BB corresponding to one part of the carriers may be processed by the first BB module 1003 in the first FRU 1000a, and the BB corresponding to the other part of the carriers may be processed by the second BB module 1009 in the second FRU 1000b. In this embodiment, the BB signal is processed based on the division of carriers, making the system architecture more flexible.

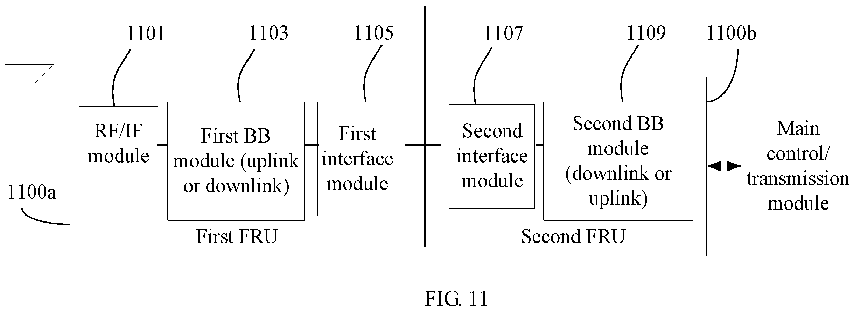

As shown in FIG. 11, the architecture of the communication system in the sixth embodiment of the present invention includes a first FRU 1100a and a second FRU 1100b. The first FRU 1100a and the second FRU 1100b include a BB module. The first FRU 1100a includes a first BB module 1103, an RF/IF module 1101, and a first interface module 1105 connected to the second FRU 1100b. The second FRU 1100b includes a second BB module 1109 and a second interface module 1107 connected to the first FRU 1100a. The RF/IF module 1101 may be directly connected to the first BB module 1103, and the first BB module 1103 is directly connected to the first interface module 1105. The RF/IF module 1101, the first BB module 1103, and the first interface module 1105 may also be connected through the backplane bus. The second BB module 1109 and the second interface module 1107 may be connected directly or through the backplane bus. In this embodiment, the uplink BB and downlink BB may be processed separately. The uplink BB is processed by the first BB module 1103 in the first FRU 1100a, and the downlink BB is processed by the second BB module 1109 in the second FRU 1100b; or the uplink BB is processed by the second BB module 1109 in the second FRU 1100b, and the downlink BB is processed by the first BB module 1103 in the first FRU 1100a. In this embodiment, the uplink BB and downlink BB are processed separately, making the system architecture more flexible.

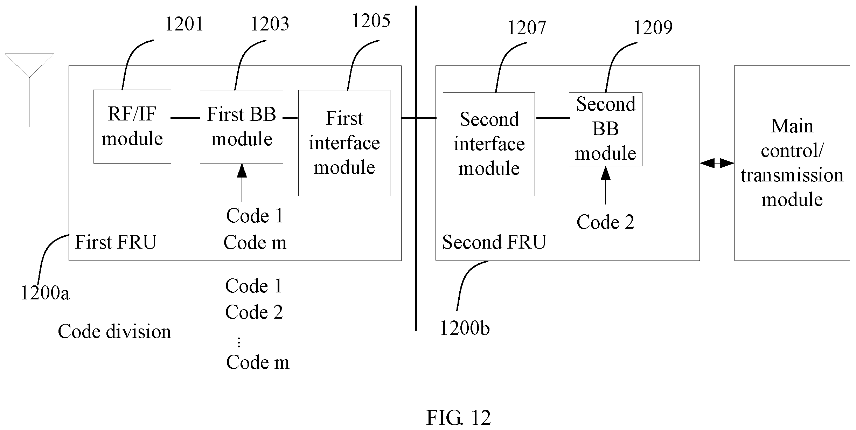

As shown in FIG. 12, the architecture of the communication system in the seventh embodiment of the present invention includes a first FRU 1200a and a second FRU 1200b. The first FRU 1200a and the second FRU 1200b include a BB module. The first FRU 1200a includes a first BB module 1203, an RF/IF module 1201, and a first interface module 1205 connected to the second FRU 1200b. The second FRU 1200b includes a second BB module 1209 and a second interface module 1207 connected to the first FRU 1200a. The RF/IF module 1201 may be directly connected to the first BB module 1203, and the first BB module 1203 is directly connected to the first interface module 1205. The RF/IF module 1201, the first BB module 1203, and the first interface module 1205 may also be connected through the backplane bus. The second BB module 1209 and the second interface module 1207 may be connected directly or through the backplane bus. In a code division multiple access (CDMA) communication system, the information transmitted through the RF interface is based on the CDMA. In this embodiment, the BB corresponding to one part of the codes is processed by the first BB module 1203 in the first FRU 1200a, and the BB corresponding to the other part of the codes is processed by the second BB module 1209 in the second FRU 1200b. In this embodiment, the BB is processed based on the division of codes, making the system architecture more flexible.

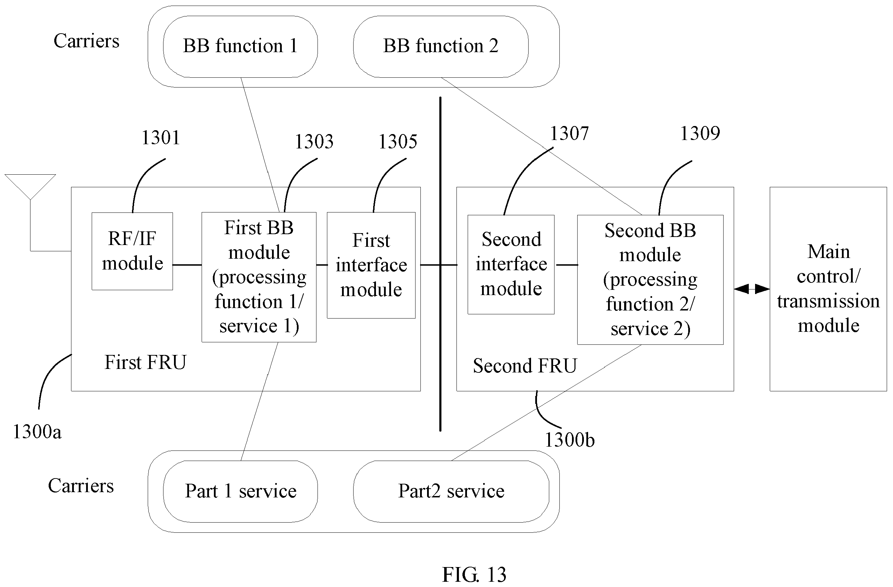

As shown in FIG. 13, the architecture of the communication system in the eighth embodiment of the present invention includes a first FRU 1300a and a second FRU 1300b. The first FRU 1300a and the second FRU 1300b include a BB module. The first FRU 1300a includes a first BB module 1303, an RF/IF module 1301, and a first interface module 1305 connected to the second FRU 1300b. The second FRU 1300b includes a second BB module 13059 and a second interface module 1307 connected to the first FRU 1300a. The RF/IF module 1301 may be directly connected to the first BB module 1303, and the first BB module 1303 is directly connected to the first interface module 1305. The RF/IF module 1301, the first BB module 1303, and the first interface module 1305 may also be connected with each other through the backplane bus. The second BB module 1309 and the second interface module 1307 may be connected directly or through the backplane bus. In this embodiment, the BB may be split and processed according to the types of services or the types of BB functions. The BB corresponding to one part of the types of services is processed by the first BB module 1303 in the first FRU 1300a, and the BB corresponding to the other part of the types of services is processed by the second BB module 1309 in the second FRU 1300b. One or more of the BB functions such as encoding, decoding, modulating, demodulating, spreading, and dispreading may be broken down according to the type of functions. One part of the functions is processed by the first BB module 1303 in the first FRU 1300a, and the other part of the functions is processed by the second BB module 1309 in the second FRU 1300b. In this embodiment, the BB is processed based on the division of types of services or types of functions, making the system architecture more flexible.

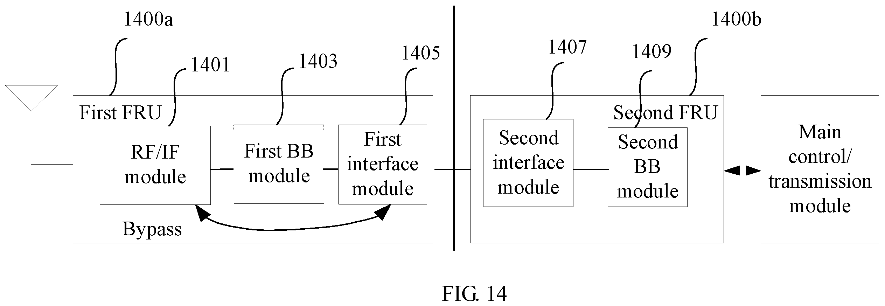

As shown in FIG. 14, the architecture of the communication system in the ninth embodiment of the present invention includes a first FRU 1400a and a second FRU 1400b. The first FRU 1400a and the second FRU 1400b include a BB module. The first FRU 1400a includes a first BB module 1403, an RF/IF module 1401, and a first interface module 1405 connected to the second FRU 1400b. The second FRU 1400b includes a second BB module 1409 and a second interface module 1407 connected to the first FRU 1400a. The RF/IF module 1401 may be directly connected to the first BB module 1403, and the first BB module 1403 is directly connected to the first interface module 1405. The RF/IF module 1401, the first BB module 1403, and the first interface module 1405 may also be connected with each other through the backplane bus. The second BB module 1409 and the second interface module 1407 may be connected directly or through the backplane bus. In this embodiment, some functions or services in the first FRU 1400a may not be needed during the product evolution. In this case, the first BB module 1403 may be bypassed by connecting the RF/IF module 1401 to the first interface module 1405 directly, so that the BB function is entirely implemented by the second FRU 1400b. Certainly, the first BB module 1403 may also be connected to bypass some of the BB functions, thus greatly improving the flexibility in the system evolution. In this embodiment, the BB is processed based on the division of services or functions, making the system architecture more flexible.

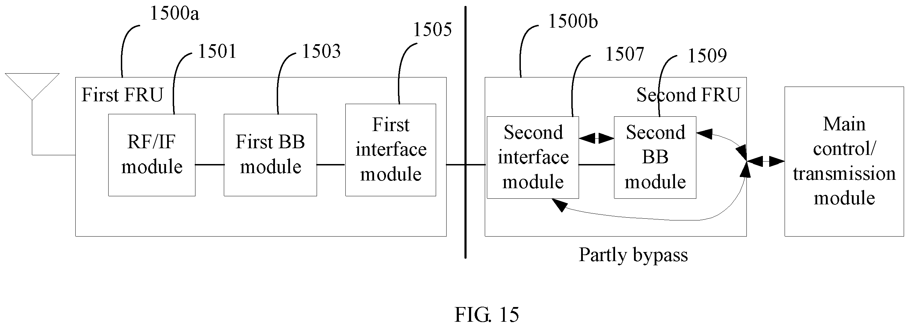

As shown in FIG. 15, the architecture of the communication system in the tenth embodiment of the present invention includes a first FRU 1500a and a second FRU 1500b. The first FRU 1500a and the second FRU 1500b include a BB module. The first FRU 1500a includes a first BB module 1503, an RF/IF module 1501, and a first interface module 1505 connected to the second FRU 1500b. The second FRU 1500b includes a second BB module 1509 and a second interface module 1507 connected to the first FRU 1500a. The RF/IF module 1501 may be directly connected to the first BB module 1503, and the first BB module 1503 is directly connected to the first interface module 1505. The RF/IF module 1501, the first BB module 1503, and the first interface module 1505 may also be connected with each other through the backplane bus. The second BB module 1509 and the second interface module 1507 may be connected directly or through the backplane bus. According to the BB processing need, one part of the BB is processed by the first BB module 1503 and the second BB module 1509, while the other part of the BB needs to be processed by the first BB module 1503 only. The second BB module 1509 may be partly bypassed in the second FRU 1500b, so that the second interface module 1507 is directly connected to the main control/transmission module. In this embodiment, the first BB module 1503 and the second BB module 1509 may process the BB together, or the first BB module 1503 processes the BB independently, thus greatly improving the flexibility in the system evolution and upgrade.

According to the architectures of the communication systems provided in the preceding first embodiment to the tenth embodiment, an interface is also provided.

The first interface module provided in an embodiment of the present invention is located in the first FRU. In the downlink data stream direction, one part of the data is input to the first BB module through the first interface module; the other part of the data is input to the RF/IF module through the first interface module, without being processed by the first BB module. In the uplink data stream direction, the data output by the RF/IF module and the data output by the first BB module are converged on the first interface module. For some services, the first interface module may be connected to the RF/IF module to bypass the first BB module completely or partly.

The second interface module provided in an embodiment of the present invention is located in the second FRU. In the uplink data stream direction, one part of the data is input to the second BB module through the second interface module; the other part of the data is input to the main control/transmission module through the second interface module, without being processed by the second BB module. In the downlink data stream direction, the data output by the main control/transmission module and the data output by the second BB module are converged on the second interface module. For some services, the second interface module may be connected to the main control/transmission module to bypass the second BB module completely or partly.

In another embodiment of the interface, the communication system includes the preceding first interface module and the second interface module at the same time. The first interface module is located in the first FRU. In the downlink data stream direction, one part of the data is input to the first BB module through the first interface module; the other part of the data is input to the RF/IF module through the first interface module, without being processed by the first BB module. In the uplink data stream direction, the data output by the RF/IF module and the data output by the first BB module are converged on the first interface module. The second interface module is located in the second FRU. In the uplink data stream direction, one part of the data is input to the second BB module through the second interface module; the other part of the data is input to the main control/transmission module through the second interface module, without being processed by the second BB module. In the downlink data stream direction, the data output by the main control/transmission module and the data output by the second BB module are converged on the second interface module. Some services need to be processed by the first BB module and the second BB module, while other services may be processed independently by the first BB module or the second BB module. Therefore, the first interface module may be connected to the RF/IF module to bypass the first BB module completely or partly, or the second interface module is connected to the main control/transmission module to bypass the second BB module completely or partly.

According to the architectures of the communication systems provided in the preceding first embodiment to the tenth embodiment, a communication method is also provided.

The communication method provided in an embodiment of the present invention includes: in the downlink data stream direction, the first BB module receives data from the first interface module, processes one part of the data according to a configuration rule for processing data, and outputs the processed data to the RF/IF module; in the uplink data stream direction, the first BB module receives data from the RF/IF module, processes one part of the data, and outputs the processed data to the first interface module. For some services, the first interface module may be connected to the RF/IF module to bypass the first BB module completely or partly. In this way, these services may be processed by modules other than the first BB module, making the service processing more flexible.

The communication method provided in another embodiment of the present invention includes: in the uplink data stream direction, the second BB module receives data from the second interface module, processes one part of the data according to the configuration rule for processing data, and outputs the processed data to the main control/transmission module; in the downlink data stream direction, the second BB module receives data from the main control/transmission module, processes one part of the data, and outputs the processed data to the second interface module. For some services, the second interface module may be connected to the main control/transmission module to bypass the second BB module completely or partly.

In this embodiment, the first interface module communicates with the second interface module.

In the downlink data stream direction, the first BB module receives data from the first interface module, processes one part of the data according to the configuration rule for processing data, and outputs the processed data to the RF/IF module; in the uplink data stream direction, the first BB module receives data from the RF/IF module, processes one part of the data, and outputs the processed data to the first interface module.

In the uplink data stream direction, the second BB module receives data from the second interface module, processes one part of the data according to the configuration rule for processing data, and outputs the processed data to the main control/transmission module; in the downlink data stream direction, the second BB module receives data from the main control/transmission module, processes one part of the data, and outputs the processed data to the second interface module.

Some services need to be processed by the first BB module and the second BB module, while other services may be processed independently by the first BB module or the second BB module. Therefore, the first interface module may be connected to the RF/IF module to bypass the first BB module completely or partly, or the second interface module is connected to the main control/transmission module to bypass the second BB module completely or partly.

In the preceding embodiments of the communication method, the configuration rule for processing data may be as follows: The first BB module is adapted to process one part of pre-allocated two parts of timeslots, and the second BB module is adapted to process the other part of the pre-allocated two parts of timeslots; or the first BB module is adapted to process a BB signal corresponding to one part of pre-allocated two parts of carriers, and the second BB module is adapted to process a BB signal corresponding to the other part of the pre-allocated two parts of carriers; or the first BB module is adapted to process a BB signal corresponding to one part of pre-allocated two parts of codes, and the second BB module is adapted to process a BB signal corresponding to the other part of the pre-allocated two parts of codes; or the first BB module is adapted to process a signal corresponding to one part of pre-allocated two parts of types of services, and the second BB module is adapted to process a BB signal corresponding to the other part of the pre-allocated two parts of types of services; or the first BB module is adapted to process a BB signal corresponding to one group of pre-allocated two groups of functions, and the second BB module is adapted to process a BB signal corresponding to the other group of the pre-allocated two groups of functions, where the functions include one or more of the following functions: encoding, decoding, modulating, demodulating spreading, and dispreading; or the first BB module is adapted to process an uplink BB signal, and the second BB module is adapted to process a downlink BB signal; or the first BB module is adapted to process a downlink BB signal, and the second BB module is adapted to process an uplink BB signal.

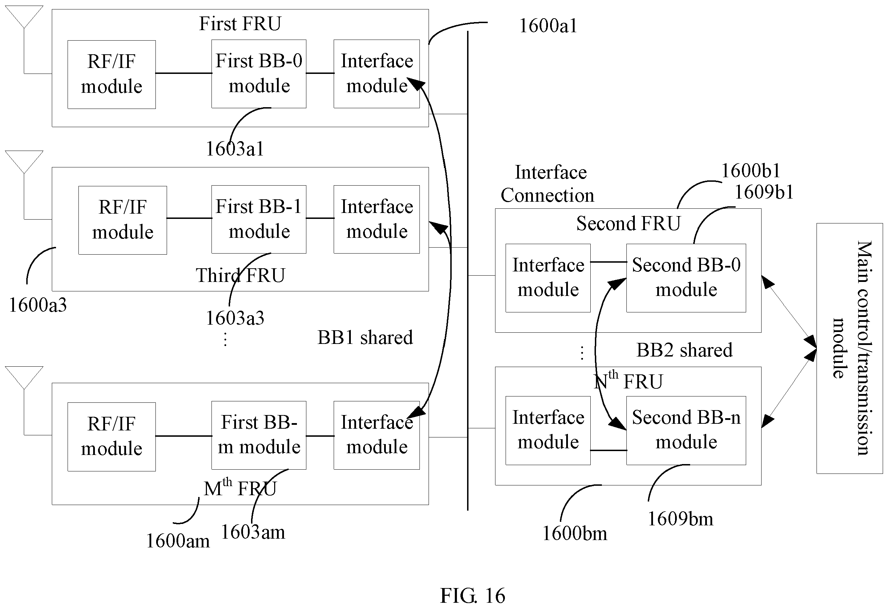

As shown in FIG. 16, the architecture of the communication system in the eleventh embodiment of the present invention may support a BB resource pool formed between the first BB modules (1603a1 to 1603am) of multiple first FRUs (1600a1 to 1600am), where the first BB modules 1603a1 to 1603am are interconnected through respective interface modules; or support a larger resource pool formed between the first BB modules (1603a1 to 1603am) of multiple first FRUs and the second BB modules (1609b1 to 1609bm) of multiple second FRUs (1600b1 to 1600bm), where the first BB modules 1603a1 to 1603am and the second BB modules 1609b1 to 1609bm are interconnected through respective interface modules. In this embodiment, if the RF module is expanded, the BB of the new RF module has new features, and the BBs between the RF modules may form a resource pool. This system architecture supporting the BB resource pool greatly improves the flexibility in the system evolution and upgrade, fully uses the old and new RF modules, and protects the investments of operators. According to the architecture of the communication system in the preceding eleventh embodiment, an interface is provided.

The resource pool formed by multiple first BB modules includes multiple first FRUs. Each first FRU includes a first BB module and a first interface module. In the downlink data stream direction, the data is input to the first BB module through the first interface module in one or more first FRUs, and is then input to the RF/IF module. In the uplink data stream direction, the data is input to the first BB module through the RF/IF module in one or more first FRUs, and is then output from the first interface module. In this embodiment, a shared resource pool is formed by multiple first BB modules, and the BB is processed by one or more of these first BB modules.

The resource pool formed by the first BB module and the second BB module includes multiple first FRUs, with each FRU including a first BB module and a first interface module. The resource pool also includes multiple second FRUs, with each FRU including a second BB module and a second interface module. In the downlink data stream direction, the data is input to the first BB module through the first interface module in one or more first FRUs, and is then input to the RF/IF module. The data output by the main control/transmission module is input to the second BB module in one or more second FRUs, and is then output to the first FRU through the second interface module. In the uplink data stream direction, the data is input to the first BB module through the RF/IF module in one or more first FRUs, and is then output from the first interface module. The data in the first FRU is input to the second interface module in one or more second FRUs according to a configuration rule, and is then output to the main control/transmission module through the second BB module. Multiple first BB modules and multiple second BB modules may form a resource pool. According to the configuration rule, the BB is processed by one or multiple first BB modules and/or second BB modules.

According to the architecture of the communication system provided in the preceding eleventh embodiment, a communication method is provided.

In the communication method where a resource pool is formed by the first BB modules, in the downlink data stream direction, the first BB module in one or multiple first FRUs receives data from the first interface module, and inputs the data to the RF/IF module. In the uplink data stream direction, the first BB module in one or more first FRUs receives data from the RF/IF module, and outputs the data from the first interface module. In this embodiment, a shared resource pool is formed by multiple first BB modules, and the BB is processed by one or more of these first BB modules.

In the communication method where a resource pool is formed by the first BB modules and the second BB modules, in the downlink data stream direction, the first BB module in one or multiple FRUs receives data from the first interface module, and inputs the data to the RF/IF module. The second BB module in one or multiple second FRUs receives data from the main control/transmission module, and outputs the data through the second interface module. In the uplink data stream direction, the first BB module in one or more first FRUs receives data from the RF/IF module, and outputs the data from the first interface module. The second BB module in one or more second FRUs receives data that is input to the second interface module according to the configuration rule, and outputs the data to the main control/transmission module. Multiple first BB modules and multiple second BB modules may form a resource pool. According to the configuration rule, the BB is processed by one or multiple first BB modules and/or second BB modules.

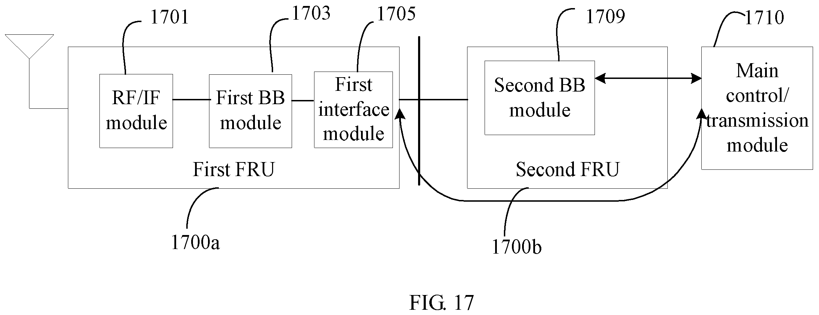

As shown in FIG. 17, the architecture of the communication system in the twelfth embodiment of the present invention includes a first FRU 1700a and a second FRU 1700b. The first FRU and the second FRU include a BB module. The first FRU includes a first BB module 1703, an RF/IF module 1701, and a first interface module 1705 connected to the second FRU. The second FRU includes a second BB module 1709. The RF/IF module 1701 may be directly connected to the first BB module 1703, and the first BB module 1703 is directly connected to the first interface module 1705. The RF/IF module 1701, the first BB module 1703, and the first interface module 1705 may also be connected with each other through the backplane bus. The data stream from the first interface module 1705 in the first FRU is directly input to the main control/transmission module 1710; all or one part of the data is forwarded by the main control/transmission module 1710 to the second BB module 1709 in the second FRU for processing. In this embodiment, the first BB module may work independently or the first BB module and the second BB module may work together, thus greatly improving the flexibility in the system evolution and upgrade.

According to the architecture of the communication system in the twelfth embodiment of the present invention, an interface is provided. The interface includes: a first interface module, located in the first FRU and adapted to: in the downlink data stream direction, receive data from the main control/transmission module, and output the data to the first BB module and finally to the RF/IF module; in the uplink data stream direction, receive data from the first BB module, and output the data to the main control/transmission module, with one part of the data sent by the main control/transmission to the second BB module in the second FRU for processing. That is, the BB processing function is implemented by the first BB module independently or by the first BB module and the second BB module together.

According to the architecture of the communication system in the twelfth embodiment of the present invention, a communication method is provided. The communication method includes: in the downlink data stream direction, the first BB module obtains the data that the first interface module receives from the main control/transmission module, and outputs the obtained data to the RF/IF module; in the uplink data stream direction, the first BB module receives data from the RF/IF module, and outputs one part of the data to the main control/transmission module, and the main control/transmission module sends the other part of the data to the second BB module in the second FRU for processing. In this embodiment, the BB processing function is implemented by the first BB module or jointly by the first BB module and the second BB module.

According to the preceding description, different RAT of base station systems have the same logical functions, but may be physically implemented by using different solutions. The physical architecture is selected according to the market demand, cost requirement, chip implementation capability, and architecture design capability. In addition, when equipment manufacturers consider the compatibility, no major change is made to a determined physical architecture of the base station. However, with the technical evolution requirement, lower cost in the procurement of new high-speed interface devices, and improvement of the architecture design capability, the equipment manufacturers need a flexible architecture with a better technological development prospect. Thus, a flexible interface design is required and the mapping from the logical architecture to the physical architecture is not limited, so as to provide operators with multiple choices and meet the requirements of different base station systems in different periods of time. For the architecture with the upper shift of the BB, the flexibility is very poor. When the BB in the equipment needs to be upgraded, an RF module needs to be added or the original module needs to be replaced if the BB hardware or software does not support new features. Thus, the operators need to pay higher costs. In addition, because the BB and the RF module are integrated in the first FRU, higher requirements are imposed for the BB in terms of integration and heat dissipation capability. Once the chip technology fails to meet the requirement or the algorithm is unstable, it is more difficult to implement the RF module.

For the architecture with the lower shift of the BB, the base station system is evolving, with different implementation capabilities in different periods of time. Thus, the lower shift of the BB makes it more complex or more expensive to implement some systems. In the future radio communications, the BB the RF module are integrated more frequently. Thus, the physical separation between the BB and the RF/IF module may prolong the processing delay. Furthermore, the communication products have different requirements for the BB processing functions at different evolution stages, and the processing capacity of the BB board may also vary. Thus, the number of types of boards will unavoidably increase according to the architecture with the lower shift of the BB.

In embodiments of the present invention, the BB may be split into two parts; one part of the BB may be integrated with the RF module; the other part may be an independent physical entity. Thus, the system architecture is more flexible, without being limited by the upper shift or lower shift of the BB.

If the BB and the RF module are initially integrated in the product, when new features are added to the RF module in the future, only a split BB module needs to be added to the second FRU to implement the system evolution. Thus, the module replacement cost is lowered, and the original investments of the operators are protected. Because the system architecture supports the functional module integrating the RF module and BB and the RF module is not integrated with the BB initially, a BB module may be added to a new first FRU module subsequently if there is a need and the condition permits. The newly added BB module works with the original module, so that
the system can be upgraded smoothly. In the first FRU module, the BB may be integrated with the RF module to meet the future requirements. When the RF module is expanded, the BB of the new RF module has new features, and the BBs between the old and new RF modules form a resource pool, which greatly improves the flexibility in the system evolution and upgrade and fully uses the new and old RF modules.

Through the descriptions of the preceding embodiments, those skilled in the art may understand that the present invention may be implemented by hardware only or by software and a necessary universal hardware platform. Based on such understandings, the technical solution under the present invention may be embodied in the form of a software product. The software product may be stored in a nonvolatile storage medium, which can be a compact disk read-only memory (CD-ROM), USB disk, or a removable hard disk. The software product includes a number of instructions that enable a computer device (personal computer, server, or network device) to execute the methods provided in the embodiments of the present invention.

The above descriptions are merely exemplary embodiments of the present invention, but not intended to limit the scope of the present invention. Any modification, equivalent replacement, or improvement made without departing from the scope of the appended claims falls within the scope of the present invention.

## Claims

1. A base station system, comprising a first field replaceable unit, FRU, (600a, 700a, 800a, 900a, 1000a, 1100a, 1200a, 1300a, 1400a, 1500a, 1600a1 to 1600am, 1700a) and a second FRU (600b, 700b, 800b, 900b, 1000b, 1100b, 1200b, 1300b, 1400b, 1500b, 1600b1...1600bm, 1700b), wherein:
the first FRU comprises:
a radio frequency/intermediate frequency, RF/IF, module (601, 701, 801, 901, 1001, 1101, 1201, 1301, 1401, 1501, 1701), configured to perform conversion between an RF signal and a base band, BB, signal;
a first BB module (603, 703, 803, 903, 1003, 1103, 1203, 1303, 1403, 1503, 1603a1 to 1603m, 1703), connected to the RF/IF module, configured to process a first part of the BB signal according to a preset configuration rule for processing data; and
a first interface module (605, 705, 805, 905, 1005, 1105, 1205, 1305, 1405, 1505, 1705) connected to the second FRU;
the second FRU comprises:
a second BB module (609, 709, 809, 909, 1009, 1109, 1209, 1309, 1409, 1509, 1609b1 to 1609bm, 1709), configured to process a BB signal other than the first part of the BB signal according to the preset configuration rule for processing data; and
a second interface module (607, 707, 807, 907, 1007, 1107, 1207, 1307, 1407, 1507, 1707) connected to the first FRU;
wherein the first BB module in the first FRU and the second BB module in the second FRU are adapted so that one part of BB functions is processed by the first BB module in the first FRU and the other part of the BB functions is processed by the second BB module in the second FRU,
wherein the BB functions comprise one or more of encoding, decoding, modulating, demodulating, spreading, and dispreading.

2. The base station system of claim 1, wherein the second FRU further comprises:
a second extension interface, wherein the second BB module connects to the second FRU through the second extension interface and/or
a first extension interface, wherein the first BB module connects to the first FRU though the first extension interface.

3. The base station system of claim 1, wherein for a time division multiple access, TDMA, communication system,
the first BB module is further configured to process a first part of pre-allocated two parts of timeslots, and the second BB module is configured to process a second part of the pre-allocated two parts of timeslots.

4. The base station system of claim 1, wherein for a code division multiple access, CDMA, system,
the first BB module is further configured to process a BB signal corresponding to a first part of pre-allocated two parts of codes, and the second BB module is configured to process a BB signal corresponding to a second part of the pre-allocated two parts of codes.

5. The base station system of claim 1, wherein:
the first BB module is further configured to process a BB signal corresponding to a first part of pre-allocated two parts of carriers, and the second BB module is configured to process a BB signal corresponding to a second part of the pre-allocated two parts of carriers; and/or
the first BB module is further configured to process a BB signal corresponding to a first type of pre-allocated two types of services, and the second BB module is configured to process a BB signal corresponding to a second type of the pre-allocated two types of services; and/or
the first BB module is further configured to process a BB signal corresponding to a first group of pre-allocated two groups of functions, and the second BB module is configured to process a BB signal corresponding to a second group of the pre-allocated two groups of functions, wherein the functions comprise one or more of the following: encoding, decoding, modulating, demodulating, spreading, and dispreading; and/or,
the first BB module is further configured to process uplink BB signals, and the second BB module is configured to process downlink BB signals; or the first BB module is configured to process downlink BB signals, and the second BB module is configured to process uplink BB signals.

6. The base station system any one of claims 1-5, wherein:
the first BB module is bypassed or the second BB module is bypassed.

7. The base station system of any one of claims 1-6, wherein:
when the base station system comprises multiple first FRUs, multiple first BB modules of the first FRUs are interconnected and form a BB resource pool; when the base station system comprises multiple second FRUs, multiple second BB modules of the second FRUs are interconnected and form a BB resource pool.

8. The base station system of any one of claims 1-7, wherein:
the first FRU is configured to connect data streams to the main control/transmission module directly, and the main control/transmission module forwards the data streams to the second BB module of the second FRU for processing.

## Patentansprüche

1. Basisstation, die eine erste vor Ort austauschbare Einheit, FRU, (600a, 700a, 800a, 900a, 1000a, 1100a, 1200a, 1300a, 1400a, 1500a, 1600a1 bis 1600am, 1700a) und eine zweite FRU (600b, 700b, 800b, 900b, 1000b, 1100b, 1200b, 1300b, 1400b, 1500b, 1600b1...1600bm, 1700b) umfasst, wobei:
die erste FRU Folgendes umfasst:
ein Funkfrequenz-/Zwischenfrequenz- bzw. RF/IF-Modul (601, 701, 801, 901,1001,1101, 1201, 1301, 1401, 1501, 1701), das dazu ausgelegt ist, eine Umwandlung zwischen einem RF-Signal und einem Basisband- bzw. BB-Signal durchzuführen;
ein erstes BB-Modul (603, 703, 803, 903, 1003, 1103, 1203, 1303, 1403, 1503, 1603a1 bis 1603m, 1703), das mit dem RF/IF-Modul verbunden ist und dazu ausgelegt, einen ersten Teil des BB-Signals gemäß einer voreingestellten Konfigurationsregel zum Verarbeiten von Daten zu verarbeiten; und
ein erstes Schnittstellenmodul (605, 705, 805, 905, 1005, 1105, 1205, 1305, 1405, 1505, 1705), das mit der zweiten FRU verbunden ist;
wobei die zweite FRU Folgendes umfasst:
ein zweites BB-Modul (609, 709, 809, 909, 1009, 1109, 1209, 1309, 1409, 1509, 1609b1 bis 1609bm, 1709), das dazu ausgelegt ist, ein BB-Signal außer dem ersten Teil des BB-Signals gemäß der voreingestellten Konfigurationsregel zum Verarbeiten von Daten zu verarbeiten; und
ein zweites Schnittstellenmodul (607, 707, 807, 907, 1007, 1107, 1207, 1307, 1407, 1507, 1707), das mit der ersten FRU verbunden ist;
wobei das erste BB-Modul in der ersten FRU und das zweite BB-Modul in der zweiten FRU so ausgebildet sind, dass ein Teil von BB-Funktionen durch das erste BB-Modul in der ersten FRU verarbeitet wird und der andere Teil der BB-Funktionen durch das zweite BB-Modul in der zweiten FRU verarbeitet wird,
wobei die BB-Funktionen eines oder mehreres von Codieren, Decodieren, Modulieren, Demodulieren, Streuen und Entstreuen umfassen.

2. Basisstationssystem nach Anspruch 1, wobei die zweite FRU ferner Folgendes umfasst:
eine zweite Erweiterungsschnittstelle, wobei das zweite BB-Modul über die zweite Erweiterungsschnittstelle mit der zweiten FRU verbunden ist, und/oder eine erste Erweiterungsschnittstelle, wobei das erste BB-Modul über die erste Erweiterungsschnittstelle mit der ersten FRU verbunden ist.

3. Basisstationssystem nach Anspruch 1, wobei für ein Time-Division-Multiple-Access- bzw. TDMA-Kommunikationssystem
das erste BB-Modul ferner dazu ausgelegt ist, einen ersten Teil von zuvor zugeordneten zwei Teilen von Zeitschlitzen zu verarbeiten, und das zweite BB-Modul dazu ausgelegt ist, einen zweiten Teil der zuvor zugeordneten zwei Teile von Zeitschlitzen zu verarbeiten.

4. Basisstationssystem nach Anspruch 1, wobei für ein Code-Division-Multiple-Access- bzw. CDMA-Kommunikationssystem
das erste BB-Modul ferner dazu ausgelegt ist, ein BB-Signal, das einem ersten Teil von zuvor zugeordneten zwei Teilen von Codes entspricht, zu verarbeiten, und das zweite BB-Modul dazu ausgelegt ist, ein BB-Signal, das einem zweiten Teil der zuvor zugeordneten zwei Teilen von Codes entspricht, zu verarbeiten.

5. Basisstationssystem nach Anspruch 1, wobei:
das erste BB-Modul ferner dazu ausgelegt ist, ein BB-Signal, das einem ersten Teil von zuvor zugeordneten zwei Teilen von Trägern entspricht, zu verarbeiten, und das zweite BB-Modul dazu ausgelegt ist, ein BB-Signal, das einem zweiten Teil der zuvor zugeordneten zwei Teilen von Trägern entspricht, zu verarbeiten; und/oder das erste BB-Modul ferner dazu ausgelegt ist, ein BB-Signal, das einem ersten Typ von zuvor zugeordneten zwei Typen von Diensten entspricht, zu verarbeiten, und das zweite BB-Modul dazu ausgelegt ist, ein BB-Signal, das einem zweiten Typ der zuvor zugeordneten zwei Typen von Diensten entspricht, zu verarbeiten; und/oder das erste BB-Modul ferner dazu ausgelegt ist, ein BB-Signal, das einer ersten Gruppe von zuvor zugeordneten zwei Gruppen von Funktionen entspricht, zu verarbeiten, und das zweite BB-Modul dazu ausgelegt ist, ein BB-Signal, das einer zweiten Gruppe der zuvor zugeordneten zwei Gruppen von Funktionen entspricht, zu verarbeiten, wobei die Funktionen eines oder mehrerer der Folgenden umfassen: Codieren, Decodieren, Modulieren, Demodulieren, Streuen und Entstreuen; und/oder
das erste BB-Modul ferner dazu ausgelegt ist, BB-Aufwärtssignale zu verarbeiten, und das zweite BB-Modul dazu ausgelegt ist, BB-Abwärtssignale zu verarbeiten; oder das erste BB-Modul dazu ausgelegt ist, BB-Abwärtssignale zu verarbeiten, und das zweite BB-Modul dazu ausgelegt ist, BB-Aufwärtssignale zu verarbeiten.

6. Basisstationssystem nach einem der Ansprüche 1-5, wobei:
das erste BB-Modul umgangen wird oder das zweite BB-Modul umgangen wird.

7. Basisstationssystem nach einem der Ansprüche 1-6, wobei:
wenn das Basisstationssystem mehrere erste FRUs umfasst, mehrere erste BB-Module der ersten FRUs miteinander verbunden sind und einen BB-Ressourcenpool bilden, wenn das Basisstationssystem mehrere zweite FRUs umfasst, mehrere zweite BB-Module der zweiten FRUs miteinander verbunden sind und ein BB-Ressourcenpool bilden.

8. Basisstationssystem nach einem der Ansprüche 1-7, wobei:
die erste FRU dazu ausgelegt ist, Datenströme direkt mit dem Hauptsteuer-/Übertragungsmodul zu verbinden und das Hauptsteuer-/Übertragungsmodul die Datenströme zum zweiten BB-Modul der zweiten FRU zur Verarbeitung weiterleitet.

## Revendications

1. Système de station de base, comprenant une première unité remplaçable sur site, FRU, (600a, 700a, 800a, 900a, 1000a, 1100a, 1200a, 1300a, 1400a, 1500a, 1600a1 à 1600am, 1700a) et une seconde unité FRU (600b, 700b, 800b, 900b, 1000b, 1100b, 1200b, 1300b, 1400b, 1500b, 1600b1 ... 1600bm, 1700b), dans lequel :
la première unité FRU comprend :
un module radiofréquence/fréquence intermédiaire, RF/IF, (601, 701, 801, 901, 1001, 1101, 1201, 1301, 1401, 1501, 1701) configuré pour effectuer une conversion entre un signal RF et un signal de bande de base, BB, ;
un premier module de bande de base BB (603, 703, 803, 903, 1003, 1103, 1203, 1303, 1403, 1503, 1603a1 à 1603m, 1703), raccordé au module RF/IF, configuré pour traiter une partie de fonctions de bande de base du signal de bande de base ; et
un premier module d'interface (605, 705, 805, 905, 1005, 1105, 1205, 1305, 1405, 1505, 1705) raccordé à la seconde unité FRU ;
la seconde unité FRU comprend :
un second module de bande de base BB (609, 709, 809, 909, 1009, 1109, 1209, 1309, 1409, 1509, 1609b1 à 1609bm, 1709), configuré pour traiter l'autre partie des fonctions de bande de base du signal de bande de base ; et
un second module d'interface (607, 707, 807, 907, 1007, 1107, 1207, 1307, 1407, 1507, 1707) raccordé à la première unité FRU ;
dans lequel le premier module de bande de base BB dans la première unité FRU et le second module de bande de base BB dans la deuxième unité FRU sont adaptés de telle sorte qu'une partie des fonctions de bande de base soit traitée par le premier module de bande de base BB dans la première unité FRU et que l'autre partie des fonctions de bande de base BB soit traitée par le second module de bande de base BB dans la seconde unité FRU,
dans lequel les fonctions de bande de base comprennent le codage et/ou le décodage et/ou la modulation et/ou la démodulation et/ou l'étalement et/ou le désétalement.

2. Système de station de base selon la revendication 1, dans lequel la seconde unité FRU comprend en outre :
une seconde interface d'extension, dans lequel le second module de bande de base se connecte à la seconde unité FRU par le biais de la seconde interface d'extension et/ou une première interface d'extension, dans lequel le premier module de bande de base se connecte à la première unité FRU par le biais de la première interface d'extension.

3. Système de station de base selon la revendication 1, dans lequel, pour un système de communication à accès multiple par répartition dans le temps, TDMA,
le premier module de bande de base est en outre configuré pour traiter une première partie de deux parties pré-attribuées de créneaux temporels et le second module de bande de base est configuré pour traiter une seconde partie des deux parties pré-attribuées de créneaux temporels.

4. Système de station de base selon la revendication 1, dans lequel, pour un système d'accès multiple par répartition en code, CDMA,
le premier module de bande de base est en outre configuré pour traiter un signal de bande de base correspondant à une première partie de deux parties pré-attribuées de codes et le second module de bande de base est configuré pour traiter un signal de bande de base correspondant à une seconde partie des deux parties pré-attribuées de codes.

5. Système de station de base selon la revendication 1, dans lequel :
le premier module de bande de base est en outre configuré pour traiter un signal de bande de base correspondant à une première partie de deux parties pré-attribuées de porteuses et le second module de bande de base est configuré pour traiter un signal de bande de base correspondant à une seconde partie des deux parties pré-attribuées de porteuses ; et/ou le premier module de bande de base est en outre configuré pour traiter un signal de bande de base correspondant à un premier type de deux types pré-attribués de services et le second module de bande de base est configuré pour traiter un signal de bande de base correspondant à un second type des deux types pré-attribués de services ; et/ou
le premier module de bande de base est en outre configuré pour traiter un signal de bande de base correspondant à un premier groupe de deux groupes pré-attribués de fonctions et le second module de bande de base est configuré pour traiter un signal de bande de base correspondant à un second groupe des deux groupes pré-attribués de fonctions, dans lequel les fonctions comprennent le codage et/ou le décodage et/ou la modulation et/ou la démodulation et/ou l'étalement et/ou le désétalement ; et/ou
le premier module de bande de base est en outre configuré pour traiter des signaux de bande de base de liaison montante et le second module de bande de base est configuré pour traiter des signaux de bande de base de liaison descendante ; ou le premier module de bande de base est configuré pour traiter des signaux de bande de base de liaison descendante et le second module de bande de base est configuré pour traiter des signaux de bande de base de liaison montante.

6. Système de station de base selon l'une quelconque des revendications 1 à 5, dans lequel :
le premier module de bande de base est court-circuité ou le second module de bande de base est court-circuité.

7. Système de station de base selon l'une quelconque des revendications 1 à 6, dans lequel :
lorsque le système de station de base comprend de multiples premières unités FRU, de multiples premiers modules de bande de base des premières unités FRU sont interconnectés et forment un groupe de ressources de bande de base ; lorsque le système de station de base comprend de multiples secondes unités FRU, de multiples seconds modules de bande de base des secondes unités FRU sont interconnectés et forment un groupe de ressources de bande de base.

8. Système de station de base selon l'une quelconque des revendications 1 à 7, dans lequel :
la première unité FRU est configurée pour raccorder des flux de données au module principal de commande/transmission directement et le module principal de commande/transmission expédie les flux de données au second module de bande de base de la seconde unité FRU pour traitement.
